# EUROPEAN PATENT SPECIFICATION

(11) **EP 2 417 826 B1**
(45) Date of publication and mention of the grant of the patent: **23.05.2018**
(21) Application number: 10762240.9
(22) Date of filing: 02.04.2010
(51) Int. Cl.: H04W 76/02, H04L 12/66

(54) **DIRECT PEER LINK ESTABLISHMENT IN WIRELESS NETWORKS**
EINRICHTUNG VON DIREKT-PEER-VERKNÜPFUNGEN IN DRAHTLOSEN NETZWERKEN
ETABLISSEMENT DE LIAISON HOMOLOGUE DIRECTE DANS DES RÉSEAUX SANS FIL

(30) Priority: 06.04.2009 US 384522
(43) Date of publication of application: 15.02.2012
(73) Proprietor: Intel Corporation, Santa Clara, CA 95054 (US)
(72) Inventor: SOOD, Kapil, Beaverton Oregon 97006 (US)
(74) Representative: HGF Limited
(86) International application number: PCT/US2010/029737
(87) International publication number: WO 2010/117894

(56) References cited:
- WO-A1-2005/053347
- WO-A2-2008/016819
- US-A1- 2004 058 682
- US-A1- 2005 036 469
- US-A1- 2005 036 469
- US-A1- 2005 122 927
- US-A1- 2006 087 995
- US-A1- 2008 069 047
- US-A1- 2008 273 507

## Description

### BACKGROUND

In wireless networks that use a network controller to schedule and control much of the communications with the other network devices (e.g., subscriber stations, or SS's), it is sometimes desirable to establish a direct communications link between two of those SS's. Various techniques have been defined for establishing such a direct link between two SS's that are in the same network. But establishing a direct link between two SS's that are in different networks is more problematic. Unfortunately, as wireless networks become more widely used and more closely spaced (e.g., multiple personal area networks in a single home), this situation is becoming more common.

US2005/0036469 describes techniques for establishing a direct link between two or more wireless devices using an access point.

### BRIEF DESCRIPTION OF THE DRAWINGS

Some embodiments of the invention may be understood by referring to the following description and accompanying drawings that are used to illustrate embodiments of the invention. In the drawings:
FIG. 1 shows a diagram of two wireless communications networks in physical proximity to one another, according to an embodiment of the invention.
FIG. 2 shows a data flow diagram of establishing, using, and terminating a direct link between two devices in different networks, according to an embodiment of the invention.
FIG. 3 shows a platform architecture for a wireless communications device, according to an embodiment of the invention.

### SUMMARY

The present invention is defined by the appended claims.

### DETAILED DESCRIPTION

In the following description, numerous specific details are set forth. However, it is understood that embodiments of the invention may be practiced without these specific details. In other instances, well-known circuits, structures and techniques have not been shown in detail in order not to obscure an understanding of this description.

References to "one embodiment", "an embodiment", "example embodiment", "various embodiments", etc., indicate that the embodiment(s) of the invention so described may include particular features, structures, or characteristics, but not every embodiment necessarily includes the particular features, structures, or characteristics. Further, some embodiments may have some, all, or none of the features described for other embodiments.

In the following description and claims, the terms "coupled" and "connected," along with their derivatives, may be used. It should be understood that these terms are not intended as synonyms for each other. Rather, in particular embodiments, "connected" is used to indicate that two or more elements are in direct physical or electrical contact with each other. "Coupled" is used to indicate that two or more elements co-operate or interact with each other, but they may or may not be in direct physical or electrical contact.

As used in the claims, unless otherwise specified the use of the ordinal adjectives "first", "second", "third", etc., to describe a common element, merely indicate that different instances of like elements are being referred to, and are not intended to imply that the elements so described must be in a given sequence, either temporally, spatially, in ranking, or in any other manner.

Various embodiments of the invention may be implemented in one or any combination of hardware, firmware, and software. The invention may also be implemented as instructions contained in or on a computer-readable medium, which may be read and executed by one or more processors to enable performance of the operations described herein. A computer-readable medium may include any mechanism for storing information in a form readable by one or more computers. For example, a computer-readable medium may include a tangible storage medium, such as but not limited to read only memory (ROM); random access memory (RAM); magnetic disk storage media; optical storage media; a flash memory device, etc.

The term "wireless" may be used to describe circuits, devices, systems, methods, techniques, communications channels, etc., that communicate data by using modulated electromagnetic radiation through a non-solid medium. The term does not imply that the associated devices do not contain any wires, although in some embodiments they might not. A wireless device may comprise at least one radio and at least one processor, where the radio transmits signals representing data and receives signals representing data, while the processor may process data to be transmitted and data that has been received. The processor may also process data that is neither transmitted nor received.

The term "network controller" (NC) is used herein to describe a wireless communications device that schedules wireless communications with other devices associated with it in the network. The term "subscriber station" (SS) is used herein to describe a wireless communications device that is associated with the NC, and whose communications with the NC are largely scheduled by the NC. The term "associated" indicates that the SS has provided sufficient information about itself that the NC is aware of the existence of the SS, and the NC and SS have agreed on enough protocols that they can communicate with each other. Other terms may be used to describe NC's, such as but not limited to "access point", "base station", "control point" (CP), etc. Other terms may be used to describe SS's, such as mobile station (MS), STA, DEV, etc. The terms used in this document are intended to encompass all such alternative labels for these functional devices.

Various embodiments of the invention permit devices in two separate networks to establish a direct communications link with each other, so that communications between the two devices do not all have to be routed through the two NCs these devices are associated with. This may be especially advantageous for high-speed time-critical communications (e.g., streaming video) in a congested network environment. The process may involve a setup procedure in which a request, a response to the request, and a confirmation of the response are all routed through the respective network controllers, with enough information contained in these exchanges that the two devices can establish the direct link without further involvement by the NCs. In some embodiments, actually being able to establish the direct link may also depend on the two devices determining they can receive each other's transmissions, with sufficient quality to permit the link to operate. Proper security measures may also be instituted to protect the direct link from attack and/or corruption.

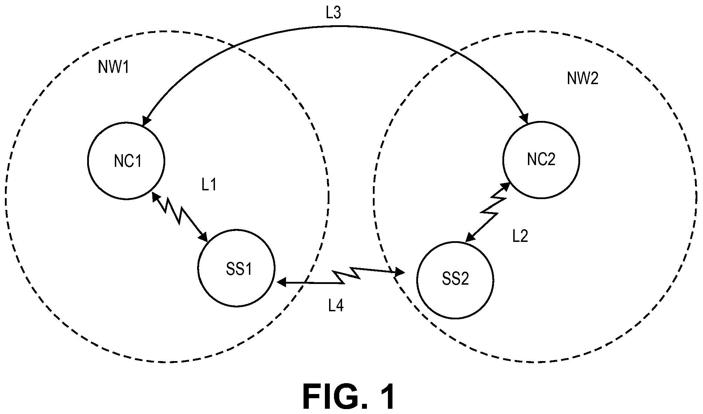

Fig. 1 shows a diagram of two wireless communications networks in physical proximity to one another, according to an embodiment of the invention. In some embodiments, the coverage area of the networks may overlap. In the illustrated embodiment, network NW1 includes a network controller NC1, which has a direct wireless communications link L1 with a subscriber station SS1 in network NW1. Network NW2 includes a network controller NC2, which has a direct wireless link L2 with SS2 in network NW2. The network controllers may each have direct and/or indirect links with other devices in their respective network as well, but for the sake of clarity these are not shown. NC1 and NC2 may also have some form of communications link L3 that allows NC1 and NC2 to communicate with each other. Link L3 may be direct or indirect, may be wireless or wired, or may be any combination of those and other alternatives. For the purposes of this document, a direct communications link permits data to be communicated directly from the originating device (the device initiating the communication) to the destination device (the device for whom the communication is ultimately intended), while an indirect link includes one or more other devices that receive and forward the data between the originating device and the destination device. In some embodiments, one or both of SS1 ands SS2 may contain a battery to provide operational power to the device.

In the illustrated embodiment, it is assumed that SS1 wishes to establish a direct wireless communications link L4 between itself and SS2. For this choice to be available, at least one of the two devices may first need to be aware of the existence of the other device. For the choice to be desirable, some entity may first need to make a request that the two devices communicate data with each other. This awareness and request may come about through various means. For example, SS1 may include the capability to produce streaming video signals, while SS2 may contain a video screen suitable for displaying such signals. Through previous communications with their respective NCs, one or both may make their capabilities known, and at least one of SS1 and SS2 may learn of the other's capability. This satisfies the awareness criteria. If a user requests that the video from SS1 be displayed on the video screen of SS2, this satisfies the request criteria. Many other scenarios may also be possible.

In a conventional system, the data being delivered to SS2 from SS1 will be transmitted from SS1 to NC1, transmitted a second time from NC1 to NC2, and transmitted a third time from NC2 to SS2, thus greatly increasing the total amount of data that has to be transmitted and also greatly increasing the latency inherent in delivering that data. The total number of transmissions will be even larger if there are intermediate devices between NC1 and NC2. Any data returned in the opposite direction will similarly be transmitted at least three times. By establishing the direct link L4 between SS1 and SS2, the data only needs to be transmitted a single time. This may reduce the total traffic over the NC1/NC2 path, and depending on various factors it may also reduce the total traffic in one or both networks.

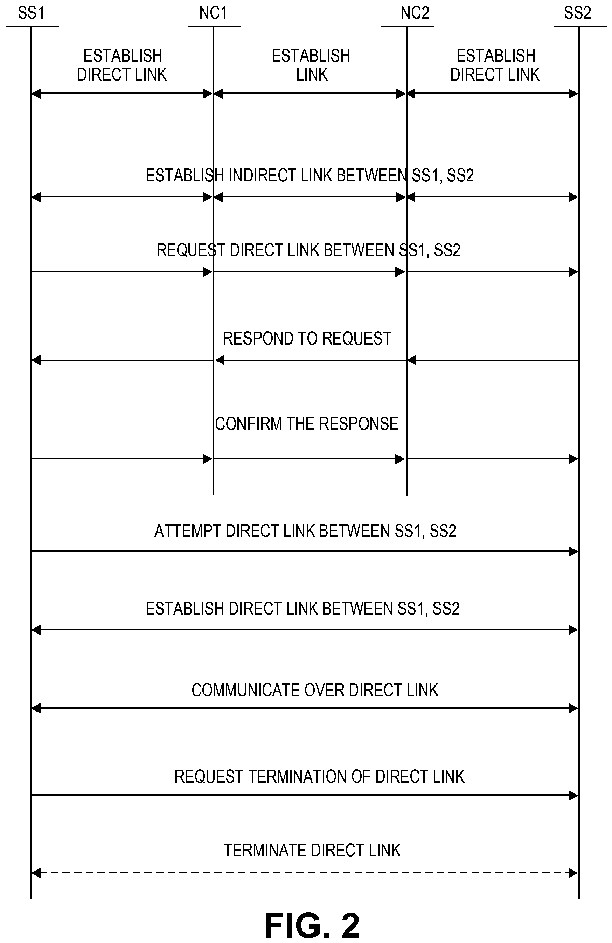

Fig. 2 shows a data flow diagram of establishing, using, and terminating a direct link between two devices in different networks, according to an embodiment of the invention. Referring to both Fig. 1 and Fig. 2, the first operations are to establish a link L1 between SS1 and NC1, establish a link L2 between SS2 and NC2, and establish a link L3 between NC1 and NC2. As previously described, the link L3 may be direct or indirect, wired or unwired, etc. Establishing these three links may effectively create an indirect link between SS1 and SS2, comprised of links LI, L2, and L3, through the intermediate NC1 and NC2. These links may be established through any feasible means.

Once the indirect link between SS1 and SS2 exists, one of the devices (e.g., SS1) may request a direct link L4 between SS1 and SS2. This request may then be delivered from SS1 to SS2 through the indirect link SS1-NC1-NC2-SS2. SS2 may then send a response back to SS1 through the indirect link SS2-NC2-NC1-SS1. If the request is rejected, the request sequence may be aborted (not shown), or another request may be made. If the request is accepted, SS1 may send a confirmation back to SS2 through the indirect link SS1-NC1-NC2-SS2.

One or more of the request, the response, and the confirmation may contain parameters needed for operation of direct link L4, so that the direct link may be established quickly using these parameters that are known by both devices. These parameters may include, but are not limited to, such things as: 1) type of network protocol to be used (WiFi, WiMAX, etc.), 2) secure association ID (e.g., mobility domain id, key holder ids, AAA server id, etc.), 3) current NC link measurements, 4) vendor specific information elements, 5) link parameter set (e.g., data rates, block ACK parameters, etc.),. In some embodiments, the request may contain a first set of recommended parameters which the response may only accept or reject, but in other embodiments the response may accept, reject, or change the recommended parameters. If different parameters are recommended in the response, the confirmation may accept or reject these different parameters. In some embodiments, this exchange of parameters may continue several times until the two devices agree upon the final parameters, or until the exchange reaches a maximum number of tries. In the illustrated embodiment, the exchange is limited to a single request, a single response, and a single confirmation.

In some embodiments, a device that wishes to establish the direct link may first determine if such a link is even feasible. For example, the device may determine whether the two devices are located physically close enough to each other that direct communications might be possible. This may be accomplished in several ways, such as but not limited to: 1) one device provides its location to the other device, which may be obtained through a GPS locator, a user input, a pre-determined fixed location, etc., 2) an assumption is made based on knowing that the associated NC's are close together, and therefore the SS's may also be close together, 3) one device has overheard transmissions from the other device that were intended for a third device, 4) etc.

Once the direct link has been agreed upon based on the previous exchanges, one device may attempt to transmit to the other device, using the previously described direct-link parameters. When the other device responds to this transmission over the direct link, the link may be considered to be formed, although some embodiments may require more than this simple two-way exchange before deciding the link is established. Once this direct link has been established, the two devices may communicate directly with each other over this direct link. In some embodiments, the parameters that were used to initially establish the link may be changed, just as the parameters of most existing links may be dynamically changed. In devices that have the capability for directional transmissions and receptions, the two devices may now go through an antenna training session to determine the antenna parameters for such directional communications.

At some point, one or both devices may decide to terminate the direct link. A device may do so by transmitting a request to terminate the link. In some embodiments, link termination may comprise one or more exchanges of information, according to a predetermined procedure. In other embodiments, the link may be considered terminated when the second device receives the link termination request. Other procedures may also be used.

While the direct link is in operation, one or both of the two devices may continue to communicate with its associated NC or with other devices using standard communication procedures. In some embodiments, the two devices may also communicate with each other using the original indirect link while the direct link is still operational. This might be useful, for example, if channel quality on the direct link becomes temporarily degraded. In some embodiments, a device may have more than one operational direct links to other devices that are all active at the same time.

Various security procedures may be applied to the direct link to protect communications on that link from such security issues as denial-of-service attacks, false messages over the link, and others. The nature and specific parameters of these security procedures may be established during the request/response/confirmation exchange, after the link has been established, or a combination of both. In some embodiments, any or all of the request, the response, and the confirmation may be protected by security techniques, such as but not limited to using a Crypto Message Integrity Code, using components of a secure Direct Link Session Key (DLSK). The DLSK may be derived from nonces (random or pseudo-random numbers), platform identifiers, device identifiers, and infrastructure security parameters. The DLSK may also be used for data encryption during operation of the direct link. The security protections may also be used for the link termination message, to protect the link from denial-of-service attacks.

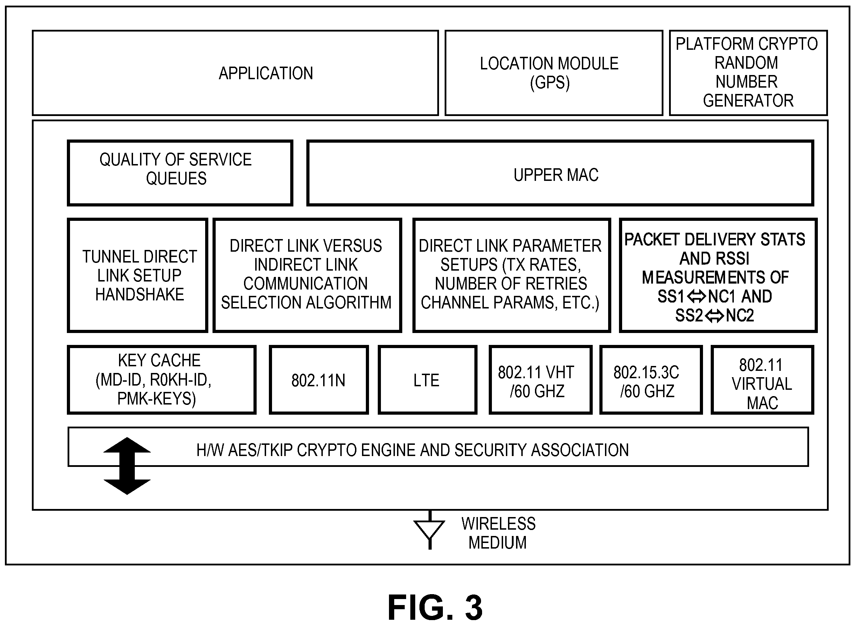

Fig. 3 shows a platform architecture for a wireless communications device, according to an embodiment of the invention. The components shown here may be used in either of both of the SS's described, but other embodiments may have more, fewer, and/or different components than those shown. Each component may be implemented in hardware, software, or any combination of these or other elements.

At the top of Fig. 3 is shown an application, which may be any application that can make use of the direct link between SS1 and SS2. For example, the application may be a video application that provides streaming video for transmission over the link, or alternately, displays streaming video received over the link. The location module may be used to determine the physical location of this device, for example, to determine if the other SS is physically close enough to this SS that a direct link is likely to be feasible. A random (or pseudo-random) number generator may be used to derive keys for the encryption of the data to be transmitted. Quality of Service Queues and the Upper Medium Access (MAC) layer may be used to determine if the current link, or the alternate link, is suitable for reliably transferring the intended data.

The next row of components may be used for the specifics of establishing the direct link. For example, a handshake process is needed for a tunnel direct link setup. A selection algorithm may be used to determine whether a direct link will be preferable to the indirect link. The direct link parameter setup may be used to determine the various parameters that the two SS's will need to use for communicating over the direct link. As previously mentioned, these may be dictated by one SS, or negotiated by both SS's. Packet delivery statistics and received signal strength indicators for the existing SS-to-NC links may be useful in making that determination.

The next row of components includes information that will be needed for formatting the communications over the direct link. One or more keys may be available for encryption/decryption efforts. The remaining components on this row determine how to format the data for the specific type of wireless standard that is to be used. In some embodiments there may only be one type available, but in other embodiments the SS may be able to choose from among several types. This may be especially important if the two networks are operating under different standards, but at least one of the two devices has the capability for choosing from among multiple standards.

The next row includes the elements needed to encrypt/decrypt the data, using the chosen security technique. In some embodiments a hardware accelerator may be used to perform the actual encryption/decryption, but other embodiments may use software, firmware, or any combination of hardware, software, and/or firmware.

The techniques described herein have numerous advantages over conventional techniques. The direct link will generally provide higher throughput with less delay time than a conventional indirect link. By using the established indirect link to set up the direct link, legacy network controllers may be used without modification. As long as the two devices have the capability for whatever type of link they establish, there is no need for the network controllers, or the networks in general, to have the capability for that type of link, and there is no need for the two networks to even operate under the same wireless standards.

The foregoing description is intended to be illustrative and not limiting. Variations will occur to those of skill in the art. Those variations are intended to be included in the various embodiments of the invention, which are limited only by the scope of the following claims.

## Claims

1. An apparatus, comprising
a first wireless communications device (SS1), SS, comprising a processor and a radio coupled to the processor, wherein the first SS (SS1) is adapted to communicate directly with a first access point (NC1), AP, the first SS comprising: a means for transmitting a request for a direct communications link (L4) with a second SS (SS2); a means for receiving a response to the request; and a means for transmitting a confirmation of the response; wherein the first SS (SS1) is further adapted to establish the direct communications link (L4) with the second SS (SS2), using parameters contained in at least one of the request, the response, and the confirmation; and **characterized in that**:
the request includes a type of network protocol to be used for the direct communications link;
the parameters include an indicator of physical location of at least one of the first SS and the second SS; and
the first SS is adapted to transmit the request for a direct communication link with the second SS to be communicated to a second AP (NC2) having a direct communications link (L2) with the second SS.

2. The apparatus of claim 1, wherein the parameters are selected from a group consisting of:
security information for encrypting the communications;
an indicator of modulation type to be used;
an indicator of data rate to be used; and
identification of the first SS and identification of the second SS.

3. The apparatus of claim 1, wherein at least one of the request, the response, and the confirmation are to be protected by using security techniques.

4. A method, comprising:
performing communications operations by a first wireless communications device (SS1) SS, with a second SS (SS2) through an indirect communications link containing a first access point, AP, and a second access point the operations comprising:
communicating, from the first SS, a request to establish a direct communications link (L4) with the second SS (SS2); receiving, by the first SS, a response to the request; communicating, from the first SS, a a confirmation of the response; and
establishing the direct communications link with the second SS, using parameters contained in at least one of the request, the response, and the confirmation; and **characterized in that**:
the request includes a type of network protocol to be used for the direct communications link (L4);
the parameters include an indicator of physical location of at least one of the first SS and the second SS; and
prior to said request being communicated, the second SS (SS2) has a direct communications link (L2) with a second AP (NC2), and the second AP has a communications link (L3) with the first AP (NC1).

5. The method of claim 4, wherein the parameters are selected from a group consisting of:
security information for encrypting the communications;
an indicator of modulation type to be used;
an indicator of data rate to be used;
identification of the first SS and identification of the second SS; and
type of network protocol to be followed.

6. The method of claim 4, wherein the communications between the first AP (NC1) and the first SS (SS1) follow a different communications protocol than communications between the second AP (NC2) and the second SS (SS2), or optionally, wherein subsequent to establishment of the direct link (L4) with the second SS, the first SS alternates between communicating with the second SS over the direct link and communicating with the first AP.

7. The method of claim 4, wherein said communicating the request, the response, and the confirmation comprises:
the first SS (SS1) transmitting the request and the confirmation, with the second SS (SS2) indicated as a first destination device; and
the second SS transmitting the response, with the first SS indicated as a second destination device.

8. The method of claim 4, wherein said communicating the request, the response, and the confirmation comprises:
the second SS (SS2) transmitting the request and the confirmation, with the first SS (SS1) indicated as a first destination device; and
the first SS transmitting the response, with the second SS indicated as a second destination device.

9. The method of claim 4, further comprising using a security technique to protect at least one of the request, the response, and the confirmation.

10. An article comprising
a tangible non-transitory computer-readable medium that contains instructions, which when executed by one or more processors result in performing the method of any one of claims 4 to 9.

## Patentansprüche

1. Vorrichtung, umfassend:
eine erste Drahtloskommunikationsvorrichtung (SS1), SS, umfassend einen Prozessor und ein Funkgerät, das mit dem Prozessor gekoppelt ist, wobei die erste SS (SS1) dafür geeignet ist, direkt mit einem ersten Zugangspunkt (NC1), AP, zu kommunizieren, wobei die erste SS umfasst:
ein Mittel zum Senden einer Anforderung einer direkten Kommunikationsverbindung (L4) mit einer zweiten SS (SS2);
ein Mittel zum Empfangen einer Antwort auf die Anforderung; und
ein Mittel zum Senden einer Bestätigung der Antwort;
wobei die erste SS (SS1) ferner dafür geeignet ist, die direkte Kommunikationsverbindung (L4) mit der zweiten SS (SS2) unter Verwendung von Parametern herzustellen, die in wenigstens einer von der Anforderung, der Antwort und der Bestätigung; und **dadurch gekennzeichnet, dass**:
die Anforderung einen Netzwerkprotokoll-Typ beinhaltet, der für die direkte Kommunikationsverbindung zu verwenden ist;
die Parameter einen Indikator des physischen Standorts von wenigstens einer von der ersten SS und der zweiten SS beinhalten; und
die erste SS dafür geeignet ist, die zu kommunizierende Anforderung einer direkten Kommunikationsverbindung mit der zweiten SS an einen zweiten AP (NC2) zu senden, der eine direkte Kommunikationsverbindung (L2) mit der zweiten SS hat.

2. Vorrichtung nach Anspruch 1, wobei die Parameter aus einer Gruppe ausgewählt werden, bestehend aus:
Sicherheitsinformationen zum Verschlüsseln der Kommunikation;
einem Indikator des zu verwendenden Modulationstyps;
einem Indikator der zu verwendenden Datenrate; und
einer Identifikation der ersten SS und einer Identifikation der zweiten SS.

3. Vorrichtung nach Anspruch 1, wobei wenigstens eine von der Anforderung, der Antwort und der Bestätigung unter Verwendung von Sicherheitstechniken zu schützen sind.

4. Verfahren, umfassend:
Durchführen von Kommunikationsvorgängen durch eine erste Drahtloskommunikationsvorrichtung (SS1), SS, mit einer zweiten SS (SS2) über eine indirekte Kommunikationsverbindung, die einen ersten Zugangspunkt, AP, und einen zweiten Zugangspunkt enthält, wobei die Vorgänge umfassen:
Kommunizieren, von der ersten SS, einer Anforderung, eine direkte Kommunikationsverbindung (L4) mit der zweiten SS (SS2) herzustellen;
Empfangen, durch die erste SS, einer Antwort auf die Anforderung;
Kommunizieren, von der ersten SS, einer Bestätigung der Antwort; und
Herstellen der direkten Kommunikationsverbindung mit der zweiten SS unter Verwendung von Parametern, die in wenigstens einer von der Anforderung, der Antwort und der Bestätigung enthalten sind; und **dadurch gekennzeichnet, dass**:
die Anforderung einen Netzwerkprotokoll-Typ beinhaltet, der für die direkte Kommunikationsverbindung (L4) zu verwenden ist;
die Parameter einen Indikator des physischen Standorts von wenigstens einer von der ersten SS und der zweiten SS beinhalten; und
bevor die Anforderung kommuniziert wird, die zweite SS (SS2) eine direkte Kommunikationsverbindung (L2) mit einer zweiten AP (NC2) hat und der zweite AP eine Kommunikationsverbindung (L3) mit dem ersten AP (NC1) hat.

5. Verfahren nach Anspruch 4, wobei die Parameter aus einer Gruppe ausgewählt werden, bestehend aus:
Sicherheitsinformationen zum Verschlüsseln der Mitteilungen;
einem Indikator des zu verwendenden Modulationstyps;
einem Indikator der zu verwendenden Datenrate;
einer Identifikation der ersten SS und einer Identifikation der zweiten SS; und
einem zu befolgenden Netzwerkprotokoll-Typ.

6. Verfahren nach Anspruch 4, wobei die Kommunikation zwischen dem ersten AP (NC1) und der ersten SS (SS1) ein anderes Kommunikationsprotokoll befolgt als die Kommunikation zwischen dem zweiten AP (NC2) und dem zweiten SS (SS2), oder wobei optional nach der Herstellung der direkten Verbindung (L4) mit der zweiten SS die erste SS zwischen einer Kommunikation mit der zweiten SS über die direkte Verbindung und einer Kommunikation mit der ersten AP wechselt.

7. Verfahren nach Anspruch 4, wobei das Kommunizieren der Anforderung, der Antwort und der Bestätigung umfasst:
Senden der Anforderung und der Bestätigung durch die erste SS (SS1), wobei die zweite SS (SS2) als erste Zielvorrichtung angegeben wird; und
Senden der Antwort durch die zweite SS, wobei die erste SS als zweite Zielvorrichtung angegeben wird.

8. Verfahren nach Anspruch 4, wobei das Kommunizieren der Anforderung, der Antwort und der Bestätigung umfasst:
Senden der Anforderung und der Bestätigung durch die zweite SS (SS2), wobei die erste SS (SS1) als erste Zielvorrichtung angegeben wird; und
Senden der Antwort durch die erste SS, wobei die zweite SS als zweite Zielvorrichtung angegeben wird.

9. Verfahren nach Anspruch 4, ferner umfassend das Verwenden einer Sicherheitstechnik, um wenigstens eine von der Anforderung, der Antwort und der Bestätigung zu schützen.

10. Artikel, umfassend:
ein greifbares nicht-flüchtiges computerlesbares Medium, das Befehle enthält, die, wenn sie durch einen oder mehrere Prozessoren ausgeführt werden, zur Durchführung des Verfahrens nach einem der Ansprüche 4 bis 9 führen.

## Revendications

1. Appareil, comprenant :
un premier dispositif de communication sans fil (SS1), SS, comprenant un processeur et une radio couplée au processeur, dans lequel le premier SS (SS1) est adapté pour communiquer directement avec un premier point d'accès (NCI), AP, le premier SS comprenant :
un moyen pour transmettre une demande, d'une liaison de communication directe (L4) à un second SS (SS2) ;
un moyen pour recevoir une réponse à la demande ; et
un moyen pour transmettre une confirmation de la réponse ;
dans lequel le premier SS (SS1) est en outre adapté pour établir la liaison de communication directe (L4) au second SS (SS2), en utilisant des paramètres contenus dans au moins l'une parmi la demande, la réponse, et la confirmation ; et **caractérisé en ce que** :
la demande inclut un type de protocole de réseau destiné à être utilisé pour la liaison de communication directe ;
les paramètres incluent un indicateur de localisation physique d'au moins l'un parmi le premier SS et le second SS ; et
le premier SS est adapté pour transmettre la demande, d'une liaison de communication directe au second SS, pour être communiquée à un second AP (NC2) possédant une liaison de communication directe (L2) au second SS.

2. Appareil selon la revendication 1, dans lequel les paramètres sont sélectionnés parmi un groupe constitué de :
informations de sécurité pour chiffrer les communications ;
un indicateur de type de modulation destiné à être utilisé ;
un indicateur de débit de données destiné à être utilisé ; et
identification du premier SS et identification du second SS.

3. Appareil selon la revendication 1, dans lequel au moins l'une parmi la demande, la réponse, et la confirmation doivent être protégées en utilisant des techniques de sécurité.

4. Procédé, comprenant :
la réalisation d'opérations de communication par un premier dispositif de communication sans fil (SS1) SS, avec un second SS (SS2) par l'intermédiaire d'une liaison de communication indirecte contenant un premier point d'accès, AP, et un second point d'accès, les opérations comprenant :
la communication, à partir du premier SS, d'une demande d'établissement d'une liaison de communication directe (L4) au second SS (SS2) ;
la réception, par le premier SS, d'une réponse à la demande ;
la communication, à partir du premier SS, d'une confirmation de la réponse ; et
l'établissement de la liaison de communication directe au second SS, en utilisant des paramètres contenus dans au moins l'une parmi la demande, la réponse, et la confirmation ; et **caractérisé en ce que** :
la demande inclut un type de protocole de réseau destiné à être utilisé pour la liaison de communication directe (L4) ;
les paramètres incluent un indicateur de localisation physique d'au moins l'un parmi le premier SS et le second SS ; et
avant que ladite demande soit communiquée, le second SS (SS2) possède une liaison de communication directe (L2) à un second AP (NC2), et le second AP possède une liaison de communication (L3) au premier AP (NC1).

5. Procédé selon la revendication 4, dans lequel les paramètres sont sélectionnés parmi un groupe constitué de :
informations de sécurité pour chiffrer les communications ;
un indicateur de type de modulation destiné à être utilisé ;
un indicateur de débit de données destiné à être utilisé ;
identification du premier SS et identification du second SS ; et
type de protocole de réseau destiné à être suivi.

6. Procédé selon la revendication 4, dans lequel les communications entre le premier AP (NC1) et le premier SS (SS1) suivent un protocole de communication différent des communications entre le second AP (NC2) et le second SS (SS2), ou optionnellement, dans lequel, suivant l'établissement de la liaison directe (L4) au second SS, le premier SS alterne entre la communication avec le second SS par l'intermédiaire de la liaison directe et la communication avec le premier AP.

7. Procédé selon la revendication 4, dans lequel ladite communication de la demande, de la réponse, et de la confirmation comprend :
par le premier SS (SS1), la transmission de la demande et de la confirmation, avec le second SS (SS2), indiqué en tant que premier dispositif de destination ; et
par le second SS, la transmission de la réponse, avec le premier SS indiqué en tant que second dispositif de destination.

8. Procédé selon la revendication 4, dans lequel ladite communication de la demande, de la réponse, et de la confirmation comprend :
par le second SS (SS2), la transmission de la demande et de la confirmation, avec le premier SS (SS1) indiqué en tant que premier dispositif de destination ; et
par le premier SS, la transmission de la réponse, avec le second SS indiqué en tant que second dispositif de destination.

9. Procédé selon la revendication 4, comprenant en outre l'utilisation d'une technique de sécurité pour protéger au moins l'une parmi la demande, la réponse, et la confirmation.

10. Article, comprenant :
un support tangible non transitoire lisible par ordinateur qui contient des instructions, qui lorsqu'elles sont exécutées par un ou plusieurs processeurs, ont pour résultat la réalisation du procédé selon l'une quelconque des revendications 4 à 9.
